# EUROPEAN PATENT SPECIFICATION

(11) **EP 2 085 743 B1**
(45) Date of publication and mention of the grant of the patent: **02.03.2011**
(21) Application number: 08150871.5
(22) Date of filing: 31.01.2008
(51) Int. Cl.: G01B 11/06

(54) **Thickness sensor for measuring the thickness of sheet-like objects**
Dickensensor zum Messen der Dicke von blattartigen Objekten
Détecteur d'épaisseur pour mesurer l'épaisseur d'objets de type feuille

(43) Date of publication of application: 05.08.2009
(73) Proprietor: Neopost Technologies, 92220 Bagneux (FR)
(72) Inventor: Rudolphi, Thomas, 8618 NP Oosthem (NL)
(74) Representative: Hatzmann, Martin

(56) References cited:
- EP-A- 0 548 874
- EP-A- 1 471 470
- WO-A-94/04378
- DE-A1- 4 125 450
- US-A- 3 826 487

## Description

### FIELD AND BACKGROUND OF THE INVENTION

The invention relates to a thickness measurement sensor according to the introduction portion of claim 1.

In paper handling machines such as sheet feeders or inserters for inserting postal items into envelopes, sheets of paper are transported in a mechanized manner. The measured thickness can for instance indicate whether inadvertently more than one sheet has been fed. For this purpose, several sensors are known, such as Hall sensors comprising one or two magnets. Such sensors require a large casing, need to be calibrated and fine tuned periodically and exhibit non-linear behaviour.

From United States Patent 5,526,939, a method is known for checking the composition of multilayer units, wherein a single measuring unit is applied in combination with a calculation and control unit for tracking the variation in thickness. In this method, a measured value is compared against a reference value which is determined by the control unit from a first unit of a first predetermined composition. This requires preserving information of each predetermined unit composition and a relatively complex calculation management scheme.

A thickness sensor of the initially identified type is known from United States Patent 3,826,487.

### SUMMARY OF THE INVENTION

It is an object of the invention to provide a simple solution for taking accurate thickness measurements from thin objects.

This object is achieved according to the invention by providing a sensor according to claim 1.

Screening off a portion of an array of photo sensitive elements from a light source with a screening member which is coupled to a contact member that is displaced by a sheet-like object of which the thickness is to be measured, creates a dark/light transition in a position along the array, which position depends on the position of the contact member, which is, in turn, determined by the thickness of the sheet with which the contact member is in contact. Using the detection of screened off and/or not screened off photo sensitive elements from a smoothed series of output signals as a measure for the displacement of the contact member in relation to a reference plane, allows determination of the thickness of the sheet-like object in a simple and reliable manner and there is no need for recalibration to compensate for drift in sensitivity.

Particular embodiments of the invention are set forth in the dependent claims.

Further objects, features, effects and details of the invention are described below.

### BRIEF DESCRIPTION OF THE DRAWING

Fig. 1 is a schematic side view of an embodiment of a sensor according to the invention.
Fig. 2 is a circuit diagram of an embodiment of a sensor according to the invention.
Fig. 3 is a graph showing a representation of three interdependent signals.
Fig 4 is a schematic side view of a second embodiment of a sensor according to the invention.
Fig 5 is a schematic side view of a third embodiment of a sensor according to the invention.
Fig 6 is a schematic side view of a fourth embodiment of a sensor according to embodiment of the invention.

### DETAILED DESCRIPTION

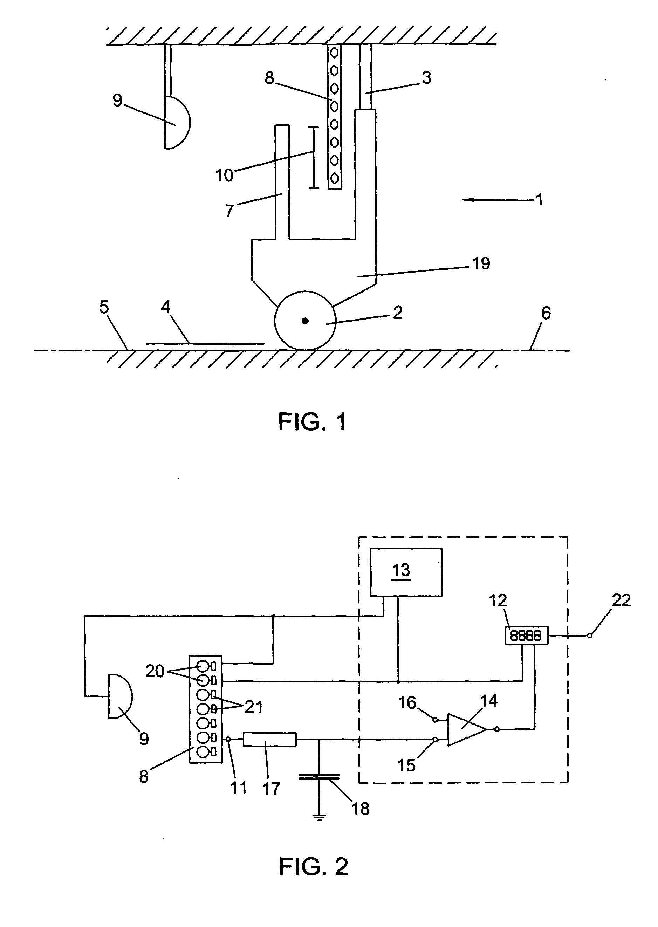

In Figs. 1 and 2, a sensor 1 is shown having a contact member 2 suspended movably in a longitudinal direction of a guide rod 3. The contact member 2 rests against a sheet-like object 4 that is transported along a support surface 5 facing the contact member 2 and defining a reference plane 6 in a fixed position relative to the guide rod 3. In the present example, the contact member 2 rests against the sheet due to gravity. However, the contact member may also be urged in contact with the sheet by other, alternative or additional means, such as a spring. To reduce friction between the sheet 4 and the contact member 2, the contact member 2 is provided in the form of a contact wheel 2 that is rotatably suspended from a carrier 19 slidable along the guide rod 3.

A screening member 7 for screening off one or more photo sensitive elements 20 of an array 8 of photo sensitive elements 20 from light incident from a light source 9 is also mounted to the carrier 19 and therefore suspended for movement together with the contact wheel 2. In this example, the light source 9 is provided in the form of a Light Emitting Diode (LED). The light source 9 is mounted in a fixed position relative to the reference plane 6 and facing the array 8 of photo sensitive elements 20 in such a position that a section 10 of the array 8 of photo sensitive elements 20 is screened off from direct light from the light source.

The array 8 is arranged for outputting signals indicating light intensities received by the photo sensitive elements 20 starting with a signal indicating a light intensity received by a first element at one end of the array 8 and ending with a signal indicating a light intensity received by a last element at the opposite end of the array 8. In the sensor according to the present example, the signals representing light intensities received by the respective photo sensitive elements 20 are sequentially outputted as a voltage level at an output terminal 11 of the array 8 during an output cycle of the array 8.

Displacement of the contact member 2, and thus of the screening member 7 is in accordance with the thickness of an object 4 transported along the support surface 5, because the contact member 2 follows the thickness contour of the object 4 as it passes along the contact member 2. The displacement of the screening member 7 relative to the light source 9 and the array 8 causes an edge of the screened off section 10 of the array to be displaced along the array 8 in accordance with the thickness of the object 4 as well. At this edge, a transition occurs from fully screened off from light incident from the light source 9 to fully exposed to light incident from the light source 9. The position of this transition is a measure for the thickness of the object 4 in contact with the contact member 2.

By processing the output signals received from the array 8, the position of the transition can be determined in a simple and reliable manner that is not significantly affected by drift in sensitivity of the array. Furthermore, the relationship between the position of the transition and the thickness of the object 4 is virtually linear over a large range, so that compensation or fine tuning to keep the sensor in a linear portion of its sensitivity range is of no practical importance.

In the sensor according to the present example, the position of the transition is determined by obtaining a signal that is a measure for the number of screened off photo sensitive elements 20. To achieve this, the sensor 1 is further equipped with a timer 12, a starting circuitry 13 connected to the timer 12 and to the array 8 for simultaneously starting the timer 12 and the output cycle of the array 8 and a threshold detector 14 connected with an input terminal 15 to the output terminal 11 of the array 8 for receiving the output signals originating from the array 8. The threshold detector 14 is arranged for generating a trigger signal in response to one of the output signals exceeding a predetermined trigger level present at a second input terminal 16 of the threshold detector 14. The threshold detector 14 is further connected to the timer 12. The timer 12 is arranged for stopping in response to receiving the trigger signal from the threshold detector 14, and for outputting a signal representing a timer value representing a registered duration of time that has elapsed from the starting to the stopping of the timer 12.

When the timer 12, after being reset and started, increases for instance by one time unit for each photo sensitive element output signal outputted at the output terminal 11 of the array 8 during the output cycle, and is stopped by the trigger signal then each time unit counted represents one photo sensitive element. The timer value then represents the number of photo sensitive elements and given the pitch at which the photo sensitive elements 20 are evenly distributed over the length of the array, this represents the thickness of an object 4 with accuracy equal to that pitch. The distribution of the photosensitive elements 20 does not need to have the same pitch over the entire length of the array. It is for instance conceivable to vary the pitch in accordance with variation in accuracy requirements over the measuring range. In the processing of the measuring result a compensation of variations in pitch may then be applied if linear measurement result is desired over the entire measurement range.

In the present example, the photo sensitive elements 20 build up charges during a measurement cycle in response to light incident from the light source 9. The charges are stored in separate buffers 21. When light impinges on the photo sensitive elements 20 this building up of charge continues and, given time, eventually will result in all buffers of the photo sensitive elements exposed to the light source 9 being fully charged.

During an output cycle of the array 8, the charges stored in the buffers are sequentially outputted as output signals via the output terminal 11 of the array 8. Such an output cycle can be performed immediately after a measurement cycle. Or, when the buffers 21 are temporarily disconnected from the respective photo sensitive elements 20, the output cycle can be performed when starting a new measurement cycle. In the latter case, consecutive cycles of measuring and outputting can be performed in less time and need to be initiated separately.

When the output signals of the photo sensitive elements are processed with digital value "0", corresponding to non-charged buffer and digital value "1", corresponding to a fully charged buffer, then for a par"tially charged buffer it has to be decided whether this corresponds to a "0" or to a "1" e.g. by means of suitably setting the threshold detector 14 via its terminal 16 and treating a signal as a "1" if it is beyond a preset threshold value.

Intermediate values of the output signal between values (on a continuous scale or on a scale of discrete values) obtained by full exposure and values obtained by full screening can be used for interpolation between the separate photo sensitive elements. In this way the accuracy of the sensor 1 can be increased. For instance, if the dark/light transition is absolutely sharp, it can be assumed that the transition is between two neighbouring photo sensitive elements 20 if none of the photo sensitive elements has outputted an intermediate value of the output signal between values obtained by full exposure and values obtained by full screening. If one of the photo sensitive elements has outputted an intermediate value of the output signal between values obtained by full exposure and values obtained by full screening, that photo sensitive cell was exposed partially and the level of that value indicates the size of the portion of that photo sensitive cell that was exposed to light.

In practice, it is difficult to obtain a very sharp dark/light transition because the light source has a certain size. However, also if, as in the present example, the transition from dark to light is such that the transition from fully screened off from light incident from the light source 9 to fully exposed to light incident from the light source 9 causes an intermediate value at at least one photo sensitive element, the amount of light received by the partially illuminated ones of the photo sensitive elements 20 can be used for interpolating the position of the dark/light transition with a resolution finer than the pitch between successive photo sensitive elements 20. In the sensor according to the present example, to output signals indicating intermediate amounts of illumination, the photo sensitive elements 20 in the array 8 are arranged for causing the charges to be built up and stored in the buffers of the adjacent photo sensitive elements to a level proportional with the amount of light received. The amount of light emitted by the light source 9 is dosed such that the buffers 21 are not fully charged or charged to cause an output level higher than the highest processable output signal at an exposure that is less than full. This is achieved by causing the light source 9 to flash a predetermined number of times during a predetermined duration. This flashing of the light source 9 is synchronised with the start of a new measurement cycle by the starting circuitry 13. It is also possible to include a control loop to control the amount of light emitted by the light source in response to the charges built up by the fully exposed photo sensitive elements 20 during a previous measurement cycle or during a test cycle.

Interpolation can for instance be carried out by calculation from digital values representing registered levels of the output signals from the photo sensitive elements by a digital processor. However, this requires the analog signal values to be processed as consecutive signals that have to be converted separately to digital values.

Interpolation can be carried out in a simpler manner by providing that the output signals outputted at the output terminal 11 of the array 8 are treated as one multi-step like signal. By smoothing the output signal from the array before it is applied to the threshold detector 14 and determining the moment when the smoothed output signal exceeds the threshold value, the location of the dark/light transition can be determined with a resolution higher than the pitch between successive photo sensitive elements 20 with no need for complex calculation and control means.

According to the present example, the smoothing circuitry is provided in the form of a resistor 17 in series with a capacitor 18 (see Fig. 2). The resistor 17 is connected between the output terminal 11 of the array 8 and the first input terminal 15 of the threshold detector 14, and the capacitor 18 is connected on one side between the output terminal of the array and the first input terminal 15 of the threshold detector 14 and on its other side to ground. A stepwise increase in the signal originating from the array 8 will result in a gradual increase of the signal applied at the input terminal 15 of the threshold detector 14 in accordance with a time constant. This results in a smoothing of the multi-step like output signal originating from the array 8, which, in turn, allows the described interpolation of the moment of detection that a threshold is exceeded and of determination of the moment at which the trigger signal stopping the timer 12 is generated.

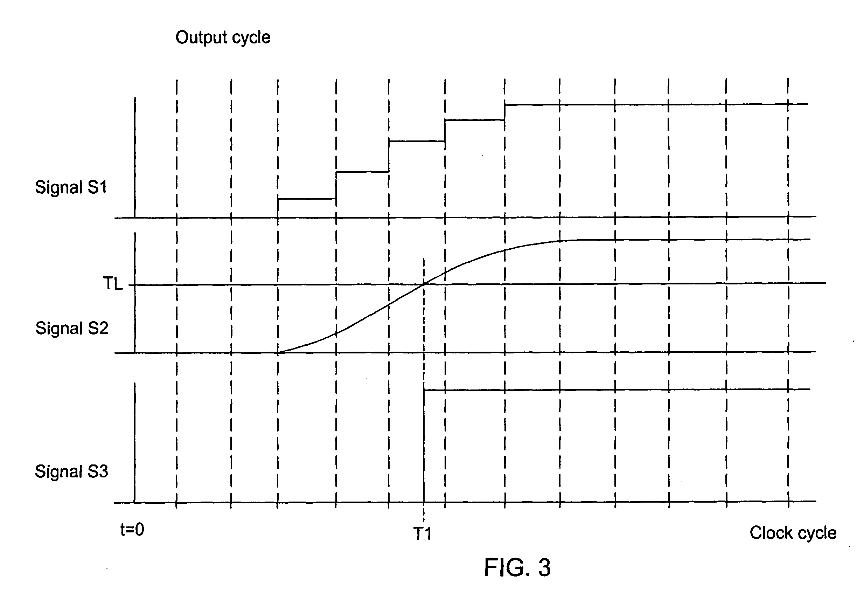

Fig 3 shows a multi-step like signal S1 outputted at output terminal 11 of the array, a smoothed signal S2 obtained at the input terminal 15 of the threshold detector 14 and a trigger signal S3 at the instant TI at which the predetermined trigger level TL is detected. At t = 0 an output cycle of the array 8 is started and during consecutive equal steps in time the output signals from the first photo sensitive element 20 at one end of the array until the last photosensitive element 20 at the opposite end of the array 8 are outputted consecutively. The step-like increase of signal S1 represents the transition from fully screened off from light incident from the light source 9 to fully exposed to light incident from the light source 9. At the point in time t = TI the predetermined trigger level TL is detected and the threshold detector 14 generates the trigger signal S3.

The trigger signal S3 is outputted to the timer 12 and causes the timer 12 to stop and to output the value at which it is stopped via an output terminal 22 of the sensor 1.

Although the interpolation may be useful to more reliably determine at which photosensitive sensor 20 the centre of a relatively wide dark/light transition is located, in order to achieve a resolution finer than the pitch between successive photo sensitive elements, it is preferred that the timer 12 has a resolution finer than duration of the time interval for outputting each of the output signals from the array. Preferably, the timer 12 is incremented a number of times during the outputting of each output signal of each photo sensitive element during an output cycle of the array 8. More specifically, the timer 12 preferably increments with a frequency equal to a multiple of a frequency at which the output signals of the photo sensitive elements 20 are outputted by the array 8, causing the Least Significant Bit (LSB) of the timer 12 to represent the distance of a photo sensitive element divided by the frequency of the timer 12. The thickness of a measured object is then equal to the timer value multiplied by the distance represented by the Least Significant Bit.

While the invention has been illustrated and described in detail in the drawing and foregoing description, such illustration and description are to be considered illustrative or exemplary and not restrictive; the invention is not limited to the disclosed embodiments. It is for instance also possible to provide a central time signal generator of which signals are applied to the array for controlling the outputting of output signals by the array and to a counter that is stopped in response to a trigger signal from the threshold detector, an output signal being outputted in response to for instance every third, fifth or tenth time signal and the counter being incremented in response to every time signal.

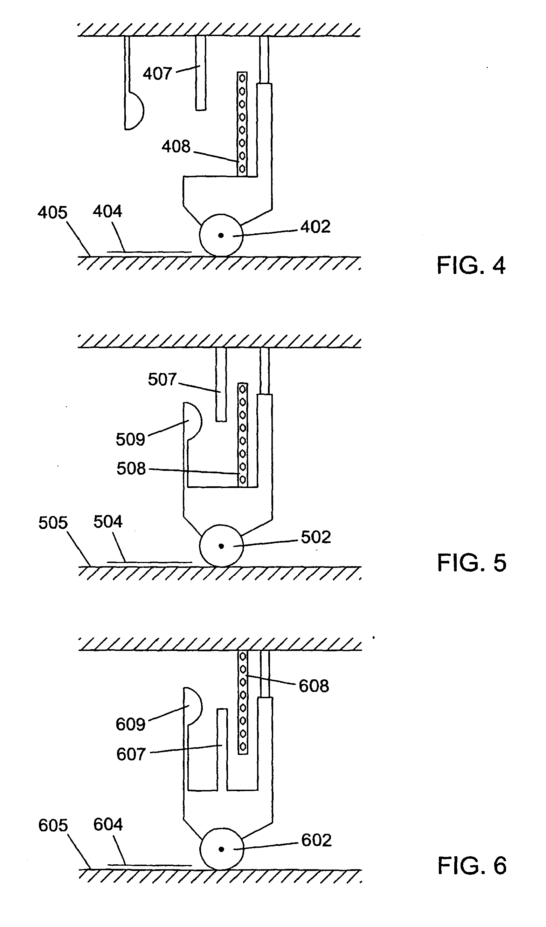

As shown in Fig 4, instead of coupling the screening member 407 to the contact member 402, the array 408 of photo sensitive elements may be coupled to the contact member 402 for displacement relative to the screening member 407. Displacement of the contact member 402 thus causes displacement of the array 408 along an edge of the screened off area in accordance with the thickness of an object 404 transported along the support surface 405.

In another alternative embodiment, shown in Fig 5, the array 508 and the light source 509 are coupled to the contact member 502 for displacement relative to the screening member 507. In this construction, displacement of the contact member 502 and thus of the combination of the array 508 and the light source 509, causes displacement of the array 508 along an edge of the screened off area, in accordance with the thickness of an object 504 transported along the support surface 505.

Or, for example, as shown in Fig 6, the screening member 607 and the light source 609 may be coupled to the contact member 602 for displacement relative to the array 608. Displacement of the contact member 602 in combination with the screening member 607 and the light source 609, causes displacement of an edge of the screened off area along the array 608, in accordance with the thickness of an object 604 transported along the support surface 605.

In yet another example, the screening member may be constituted by a member or optical element that causes a beam of light originating from the light source to have a relatively sharp boundary that may be used a light/dark transition of which the displacement over an array is determined by the thickness of an object in contact with the contact member.

The sensor may be arranged for the measurement of the thickness of single and/or collated and/or folded sheet-like objects, for instance for checking the composition and/or condition of collated sets of sheets.

Other variations to the disclosed embodiments can be understood and effected by those skilled in the art in practicing the claimed invention, from a study of the drawings, the disclosure, and the appended claims, which ultimately define the scope of the invention.

## Claims

1. A thickness measurement sensor comprising:
a contact member (2; 402; 502; 602),
a support surface (5; 405; 505; 605) facing the contact member (2; 402; 502; 602) and defining a reference plane (6),
a light source (9),
an array (8; 408; 508; 608) of photo sensitive elements arranged for receiving light from the light source (9), the array (8; 408; 508; 608) being arranged for outputting output signals at an output terminal (11) of the array (8; 408; 508; 608) representing light intensities received by the respective photo sensitive elements during an output cycle of the array (8; 408; 508; 608), and
a screening member (7; 407; 507; 607) for screening off one or more photo sensitive elements from the light source (9) in a screened off area (10) of the array (8; 408; 508; 608),
the contact member (2; 402; 502; 602) being displaceably suspended for displacement in accordance with a thickness of an object (4; 404; 504; 604) transported along the support surface (5; 405; 505; 605), and
at least the screening member (7; 407; 507; 607) or the array (8; 408; 508; 608) being coupled to the contact member (2; 402; 502; 602) for displacement relative to the array (8; 408; 508; 608) or, respectively, the screening member (7; 407; 507; 607), in accordance with the displacement of the contact member (2; 402; 502; 602), for displacement along the array (8; 408; 508; 608) of at least an edge of the screened off area (10) in accordance with the displacement of the contact member (2; 402; 502; 602),
**characterized by**
a timer (12) or a counter, the timer or counter being connected to the threshold detector (14),
a starting circuitry (13) for simultaneously starting the timer (12) or the counter and said output cycle of the array (8; 408; 508; 608), and
a threshold detector (14) connected with the array (8; 408; 508; 608) for receiving the output signals originating from the array (8; 408; 508; 608) and for generating a trigger signal in response to one of the output signals exceeding a predetermined trigger level, the threshold detector (14) being connected to the timer (12) or the counter,
the timer (12) being arranged for stopping in response to receiving the trigger signal from the threshold detector (14), and for outputting a signal representing a timer value representing a time duration between the starting and the stopping of the timer (12), or the counter being arranged for, in response to receiving the trigger signal from the threshold detector (14), stopping and outputting a signal representing a counter value,
wherein a circuitry is connected between the output terminal (11) of the array (8; 408; 508; 608) and an input terminal (15) of the threshold detector (14) for smoothing the output signal from the array (8; 408; 508; 608) before it is applied to the threshold detector (14);
wherein the photo sensitive elements are arranged for outputting output signals of an intermediate value between values obtained by full exposure of the photo sensitive element to light from the light source (9) and by full screening of the photo sensitive element from light from the light source (9), and
wherein the timer (12) or counter is arranged for, at least until stopping, incrementing a number of times during the outputting of each output signal of each photo sensitive element during the output cycle of the array (8; 408; 508; 608).

2. A sensor according to claim 1, further comprising buffers (21), each connected to one of the photo sensitive elements for storing charges outputted by the photo sensitive elements in response to light incident thereon from the light source, wherein the starting circuitry (13) is further arranged for causing flashing of the light source (9), the buffers further being arranged for outputting output signals representing stored charges at the output terminal of the array (8; 408; 508; 608) during an output cycle of the array (8; 408; 508; 608).

3. A sensor according to claim 1 or 2, wherein the light source (9) is a Light Emitting Diode (LED).

4. A sensor according to any of the preceding claims, wherein the photo sensitive elements are arranged for outputting signals representing an amount of received light larger than a minimum amount of light, or no light, received when fully screened off from light incident from the light source (9) and smaller than a maximum amount of light received when fully exposed to light incident from the light source (9).

5. A sensor according to any of the preceding claims, wherein the smoothing circuitry comprises:
a resistor (17) connected between the output terminal (11) of the array (8; 408; 508; 608) and an input terminal (15) of the threshold detector (14), and
a capacitor (18) connected between a terminal connected to the output terminal (11) of the array (8; 408; 508; 608) and to the input terminal (15) of the threshold detector (14) and a terminal connected to ground.

6. A sensor according to claim 5 wherein the timer (12) or counter is arranged for incrementing with a frequency or resolution equal to a multiple of a frequency or resolution with which the output signals of the photo sensitive elements are outputted at the output terminal (11) of the array (8; 408; 508; 608).

## Patentansprüche

1. Dickenmess-Sensor, umfassend:
ein Kontaktelement (2; 402; 502; 602),
eine Stützfläche (5; 405; 505; 605), die dem Kontaktelement (2; 402; 502; 602) gegenübersteht und eine Referenzebene (6) definiert;
eine Lichtquelle (9),
ein Feld (8; 408; 508; 608) von photosensitiven Elementen, die für den Empfang von Licht aus einer Lichtquelle (9) angeordnet sind, wobei das Feld (8; 408; 508; 608) ausgebildet ist für die Ausgabe von Ausgangssignalen an einem Ausgangsterminal (11) des Feldes (8, 408; 508; 608), die repräsentativ sind für Lichtstärken, die während eines Ausgabezyklus des Feldes (8; 408; 508; 608) von den jeweiligen photosensitiven Elementen empfangen werden, und
ein Abschirmelement (7; 407; 507; 607) zum Abschirmen eines oder mehrerer photosensitiver Elemente gegenüber der Lichtquelle (9) in einem abgeschirmten Bereich (10) des Feldes (8; 408; 508; 608), wobei das Kontaktelement (2; 402; 502; 602) bewegbar aufgehängt ist für eine Bewegung gemäß einer Dicke eines Objekts (4; 404; 504; 604), das entlang der Stützfläche (5; 405; 505; 605) transportiert wird, und
wobei
zumindest das Abschirmelement (7; 407; 507; 607) oder das Feld (8; 408; 508; 608) mit dem Kontaktelement (2; 402; 502; 602) gekoppelt ist, für eine Bewegung relativ zu dem Feld (8; 408; 508; 608) bzw. zu dem Abschirmelement (7; 407; 507; 607) entsprechend der Bewegung des Kontaktelements (2; 402; 502; 602), für eine Bewegung zumindest einer Kante des abgeschirmten Bereichs (10) entlang des Feldes (8; 408; 508; 608) entsprechend der Bewegung des Kontaktelements (2; 402; 502; 602),
**gekennzeichnet durch**
einen Timer (12) oder Zähler, wobei der Timer oder Zähler mit einem Schwellendetektor (14) verbunden ist,
eine Startschaltung (13) für das gleichzeitige Starten des Timers (12) oder des Zählers und des Ausgabezyklus des Feldes (8; 408; 508; 608) und
einen Schwellendetektor (14), der mit dem Feld (8; 408; 508; 608) verbunden ist für den Empfang von aus dem Feld (8; 408; 508; 608) stammenden Ausgangssignalen und für die Erzeugung eines Auslösesignals in Reaktion auf eines der Ausgangssignale, das einen vorgegebenen Auslösepegel überschreitet, wobei der Schwellendetektor (14) mit dem Timer (12) oder dem Zähler verbunden ist,
wobei der Timer (12) ausgebildet ist für das Stoppen in Reaktion auf den Empfang des Auslösesignals von dem Schwellendetektor (14) und für die Ausgabe eines Signals, das repräsentativ ist für einen Timerwert, der eine Zeitdauer zwischen dem Starten und Stoppen des Timers (12) angibt, oder der Zähler ausgebildet ist für das Stoppen und die Ausgabe eines Signals, das repräsentativ ist für einen Zählerwert, in Reaktion auf den Empfang des Auslösesignals von dem Schwellendetektor (14), wobei eine Schaltungsanordnung zwischen das Ausgangsterminal (11) des Feldes (8; 408; 508; 608) und ein Eingangsterminal (15) des Schwellendetektors (14) geschaltet ist, zum Glätten des Ausgangssignals aus dem Feld (8; 408; 508; 608), bevor dieses an den Schwellendetektor (14) angelegt wird;
wobei die photosensitiven Elemente ausgebildet sind für die Ausgabe von Ausgangssignalen eines Zwischenwerts zwischen Werten, die erzielt werden, wenn die photosensitiven Elemente voll dem Licht aus der Lichtquelle (9) ausgesetzt sind, und die erzielt werden, wenn die photosensitiven Elemente gegenüber dem Licht aus der Lichtquelle (9) voll abgeschirmt sind, und
wobei der Timer (12) oder Zähler ausgebildet ist für eine mehrmalige Inkrementierung während der Ausgabe jedes Ausgangssignals jedes photosensitiven Elements während des Ausgabezyklus des Feldes (8; 408; 508; 608), zumindest bis zum Stoppen.

2. Sensor nach Anspruch 1; feiner umfassend Puffer (21), deren jeder mit einem der photosensitiven Elemente verbunden ist, um Ladungen zu speichern, die von den photosensitiven Elementen in Reaktion auf Licht, das aus den Lichtquellen auf die photosensitiven Elemente fällt, von denselben abgegeben werden, wobei die Startschaltung (13) ferner ausgebildet ist für die Veranlassung des Blitzens der Lichtquelle (9), wobei die Puffer ferner ausgebildet sind für die Ausgabe von Ausgangssignalen, die repräsentativ sind für gespeicherte Ladungen an dem Ausgangsterminal des Feldes (8; 408; 508; 608) während eines Ausgabezyklus des Feldes (8; 408; 508; 608).

3. Sensor nach Anspruch 1 oder 2, wobei die Lichtquelle (9) eine Leuchtdiode (LED) ist.

4. Sensor nach einem der vorhergehenden Ansprüche, wobei die photosensitiven Elemente ausgebildet sind für die Ausgabe von Signalen, die repräsentativ sind für eine Menge empfangenen Lichts, die größer ist als eine minimale Lichtmenge oder kein Licht, das empfangen wird, wenn die photosensitiven Elemente gegenüber einfallendem Licht aus der Lichtquelle (9) voll abgeschirmt sind, und kleiner als eine maximale Menge an Licht, die empfangen wird, wenn die photosensitiven Elemente dem aus der Lichtquelle (9) einfallenden Licht voll ausgesetzt sind.

5. Sensor nach einem der vorhergehenden Ansprüche, wobei die Glättungsschaltung umfasst:
einen Widerstand (17), der zwischen das Ausgangsterminal (11) des Feldes (8; 408; 508; 608) und ein Eingangsterminal (15) des Schwellendetektors (14) geschaltet ist, und
einen Kondensator (18), der zwischen ein mit dem Ausgangsterminal (11) des Feldes (8; 408; 508; 608) verbundenes Terminal und das Terminal (15) des Schwellendetektors (14) und ein mit der Erde verbundenes Terminal geschaltet ist.

6. Sensor nach Anspruch 5, wobei der Timer (12) oder zähler ausgebildet ist für die inkrementierung mit einer Frequenz oder Auflösung, die gleich einem Mehrfachen einer Frequenz oder Auflösung ist, mit der die Ausgangssignale der photosensitiven Elemente an dem Ausgangsterminal (11) des Feldes (8; 408; 508; 608) ausgegeben werden.

## Revendications

1. Capteur de mesure d'épaisseur comprenant :
un élément de contact (2 ; 402 ; 502 ; 602),
une surface de support (5 ; 405 ; 505 ; 605) faisant face à l'élément de contact (2 ; 402 ; 502 ; 602) et définissant un plan de référence (6),
une source de lumière (9),
un réseau (8 ; 408 ; 508 ; 608) d'éléments photosensibles aménagés de manière à recevoir de la lumière de la source de lumière (9), le réseau (8 ; 408 ; 508 ; 608) étant aménagé pour délivrer à une borne de sortie (11) du réseau (8 ; 408 ; 508 ; 608) des signaux de sortie représentant des intensités lumineuses reçues par les éléments photosensibles respectifs au cours d'un cycle de sortie du réseau (8 ; 408 ; 508 ; 608), et
un élément de déparasitage (7 ; 407 ; 507 ; 607) pour déparasiter un ou plusieurs éléments photosensibles de la source de lumière (9) dans une zone déparasitée (10) du réseau (8 ; 408 ; 508 ; 608),
l'élément de contact (2 ; 402 ; 502 ; 602) étant suspendu de manière mobile pour se déplacer en fonction de l'épaisseur d'un objet (4 ; 404 ; 504 ; 604) transporté le long de la surface de support (5 ; 405 ; 505 ; 605), et
au moins l'élément de déparasitage (7 ; 407 ; 507 ; 607) ou le réseau (8 ; 408 ; 508 ; 608) étant couplé à l'élément de contact (2 ; 402 ; 502 ; 602) pour un déplacement par rapport au réseau (8 ; 408 ; 508 ; 608) ou, respectivement, par rapport à l'élément de déparasitage (7 ; 407 ; 507 ; 607), en fonction du déplacement de l'élément de contact (2 ; 402 ; 502 ; 602), de manière à assurer un déplacement le long du réseau (8 ; 408 ; 508 ; 608) d'au moins un bord de la zone déparasitée (10) en fonction du déplacement de l'élément de contact (2 ; 402 ; 502 ; 602),
**caractérisé par**
une minuterie (12) ou un compteur, la minuterie ou le compteur étant connecté(e) au détecteur de seuil (14),
un circuit de démarrage (13) pour démarrer simultanément la minuterie (12) ou le compteur et ledit cycle de sortie du réseau (8 ; 408 ; 508 ; 608), et
un détecteur de seuil (14) connecté au réseau (8 ; 408 ; 508 ; 608) pour recevoir les signaux de sortie provenant du réseau (8 ; 408 ; 508 ; 608) et pour générer un signal de déclenchement en réponse à l'un des signaux de sortie dépassant un niveau de déclenchement prédéterminé, le détecteur de seuil (14) étant connecté à la minuterie (12) ou au compteur,
la minuterie (12) étant aménagée pour s'arrêter en réponse à la réception du signal de déclenchement du détecteur de seuil (14), et pour délivrer un signal représentant une valeur de minuterie représentant un laps de temps entre le démarrage et l'arrêt de la minuterie (12) ou le compteur étant aménagé pour, en réponse à la réception du signal de déclenchement issu du détecteur de seuil (14), s'arrêter et délivrer un signal représentant une valeur de compteur,
dans lequel un circuit est connecté entre la borne de sortie (11) du réseau (8 ; 408 ; 508 ; 608) et une borne d'entrée (15) du détecteur de seuil (14) pour lisser le signal de sortie provenant du réseau (8 ; 408 ; 506 ; 608) avant qu'il ne soit appliqué au détecteur de seuil (14) ;
dans lequel les éléments photosensibles sont aménagés pour délivrer des signaux de sortie d'une valeur intermédiaire entre des valeurs obtenues par pleine exposition de l'élément photosensible à la lumière provenant de la source de lumière (9) et par déparasitage total de l'élément photosensible de la lumière provenant de la source de lumière (9), et
dans lequel la minuterie (12) ou le compteur est aménagé(e), au moins jusqu'à son arrêt, pour incrémenter un certain nombre de fois au cours de la délivrance de chaque signal de sortie de chaque élément photosensible pendant le cycle de sortie du réseau (8 ; 408 ; 508 ; 608).

2. Capteur selon la revendication 1, comprenant en outre des tampons (21), chacun d'eux étant connecté à l'un des éléments photosensibles pour stocker des charges délivrées par les éléments photosensibles en réponse à la lumière incidente les frappant depuis la source de lumière, dans lequel le circuit de démarrage (13) est également aménagé de manière à provoquer le clignotement de la source de lumière (9), les tampons étant en outre aménagés pour délivrer des signaux de sortie représentant des charges stockées à la borne de sortie du réseau (8 ; 408 ; 508 ; 608) pendant un cycle de sortie du réseau (8 ; 408 ; 508 ; 608).

3. Capteur selon la revendication 1 ou 2, dans lequel la source de lumière (9) est une diode électroluminescente (DEL),

4. Capteur selon l'une quelconque des revendications précédentes, dans lequel les éléments photosensibles sont aménagés pour délivrer des signaux représentant une quantité de lumière reçue plus grande qu'une quantité minimale de lumière, ou pas de lumière du tout, reçue dans le cas d'un déparasitage total de la lumière incidente provenant de la source de lumière (9) et plus petite qu'une quantité maximale de lumière reçue dans le cas d'une pleine exposition à la lumière incidente provenant de la source de lumière (9).

5. Capteur selon l'une quelconque des revendications précédentes, dans lequel le circuit de lissage comprend :
une résistance (17) connectée entre la borne de sortie (11) du réseau (8 ; 408 ; 508 ; 608) et une borne d'entrée (15) du détecteur de seuil (14), et
un condensateur (18) connecté entre une borne connectée à la borne de sortie (11) du réseau (8 ; 408 ; 508 ; 608) et à la borne d'entrée (15) du détecteur de seuil (14) et une borne connectée à la terre.

6. Capteur selon la revendication 5, dans lequel la minuterie (12) ou le compteur est aménagé(e) pour incrémenter avec une fréquence ou une résolution égale à un multiple de la fréquence ou de la résolution, à laquelle les signaux de sortie des éléments photosensibles sont délivrés à la borne de sortie (11) du réseau (8 ; 408 ; 508 ; 608).
